# EUROPÄISCHE PATENTSCHRIFT

(11) **EP 1 744 071 B1**
(45) Veröffentlichungstag und Bekanntmachung des Hinweises auf die Patenterteilung: **06.04.2011**
(21) Anmeldenummer: 05026429.0
(22) Anmeldetag: 03.12.2005
(51) Int. Cl.: F16C 27/06, F16C 35/077

(54) **Lageranordnung**
Bearing arrangement
Arrangement de palier

(30) Priorität: 14.07.2005 DE 102005032886
(43) Veröffentlichungstag der Anmeldung: 17.01.2007
(73) Patentinhaber: AB SKF, 415 50 Göteborg (SE)
(72) Erfinder: Brandenstein, Manfred, 97776 Eussenheim (DE); Horling, Peter, 97453 Mainberg (DE); Manne, Nils, 418 72 Göteborg (SE)
(74) Vertreter: Kohl, Thomas

(56) Entgegenhaltungen:
- DE-U- 1 738 837
- DE-U1- 20 306 508
- US-A- 3 415 500
- US-A- 3 717 779
- US-A- 4 128 281
- US-B1- 6 821 319

## Beschreibung

Die Erfindung betrifft eine Lageranordnung zum Lagern eines sich drehenden Teils einer Maschine.

Aus der WO 2001/036103 A1 ist ein Zentrifugenrotor einer Gasreinigungsvorrichtung bekannt, der mittels zweier Wälzlager gelagert ist, wobei eines der Wälzlager in einem Lagerhalter angeordnet ist. Dabei ist der Lagerhalter samt Wälzlager in der Gaseintrittsöffnung der Gasreinigungsvorrichtung angeordnet und mit Durchtrittsöffnungen versehen, damit das zu reinigende Gas durch den Lagerhalter hindurch in die eigentliche Reinigungskammer gelangen kann.

Eine weitere Lageranordnung ist aus der DE 203 06 508 U1 bekannt.

Eine Aufgabe der Erfindung ist es, eine Lageranordnung, umfassend einen Tragkörper und ein Wälzlager, bei der über eine Anlagefläche der Lageranordnung eine vorgebbare Position des Wälzlagers eingestellt wird, derart zu schaffen, dass eine exakte Positionierung in möglichst einfacher und kostengünstiger Weise erzielbar ist.

Die Aufgabe wird durch den Gegenstand des Anspruchs 1 gelöst. Vorteilhafte Ausgestaltungen sind in den Unteransprüchen beschrieben.

Gemäß Anspruch 1 umfasst eine Lageranordnung zum Lagern eines sich drehenden Teils einer Maschine
- ein Wälzlager,
- einen Tragkörper mit einem ersten hohlzylinderartigen Abschnitt, dessen Innenmantel einen Außenmantel des Wälzlagers im wesentlichen umschließt, und mit einem zweiten, vom ersten verschiedenen Abschnitt, und
- einen Kunststoffkörper, der sich zwischen dem Außenmantel des Wälzlagers und dem Innenmantel des Tragkörpers erstreckt und der zum Bewirken einer vorgebbaren Zentrierung der Lageranordnung innerhalb ihrer Einbauumgebung wenigstens teilweise eine Oberfläche des zweiten Abschnitts bedeckt.

Dadurch, dass der Kunststoffkörper die vorgebbare Zentrierung der Lageranordnung innerhalb ihrer Einbauumgebung bestimmt und auch eine Einbauposition des Wälzlagers im Tragkörper durch den Kunststoffkörper bestimmt ist, ist es möglich die Lageranordnung derart zu gestalten, dass beispielsweise eine Hauptachse der Öffnung eines Innenrings des Wälzlagers identisch mit einer Hauptachse eines Außendurchmessers der Lageranordnung in dem Bereich ist, der die Positionierung der Lagerung in ihrer Einbauumgebung bewirkt. Dadurch ist mit Vorteil der Tragkörper mit vergleichsweise großen Toleranzen und damit einfach und kostengünstig herstellbar, da die vorausgehend beschriebene exakte Positionierung bzw. Zentrierung des Wälzlagers bezüglich der Einbauumgebung durch den Kunststoffkörper bewerkstelligt wird.

In einer vorteilhaften Ausgestaltung erstreckt sich der Kunststoffkörper schichtartig auf Teilbereiche des Tragkörpers, die zum abdichtenden Anliegen vorgesehen sind. Dabei wird mit Vorteil neben der Positionier- bzw. Zentrierfunktion vom Kunststoffkörper gleichzeitig noch eine Dichtfunktion mit übernommen.

In einer vorteilhaften Ausgestaltung ist der Kunststoffkörper durch ein Spritzgießverfahren hergestellt. Dabei ist für das vorausgehend beschriebene exakte Positionieren lediglich auf ein exaktes Positionieren des Wälzlagers bezüglich einer Begrenzungsfläche einer Spritzgießform in demjenigen Bereich zu achten, der die für die Positionierung der Lageranordnung zuständige Oberfläche begrenzt.

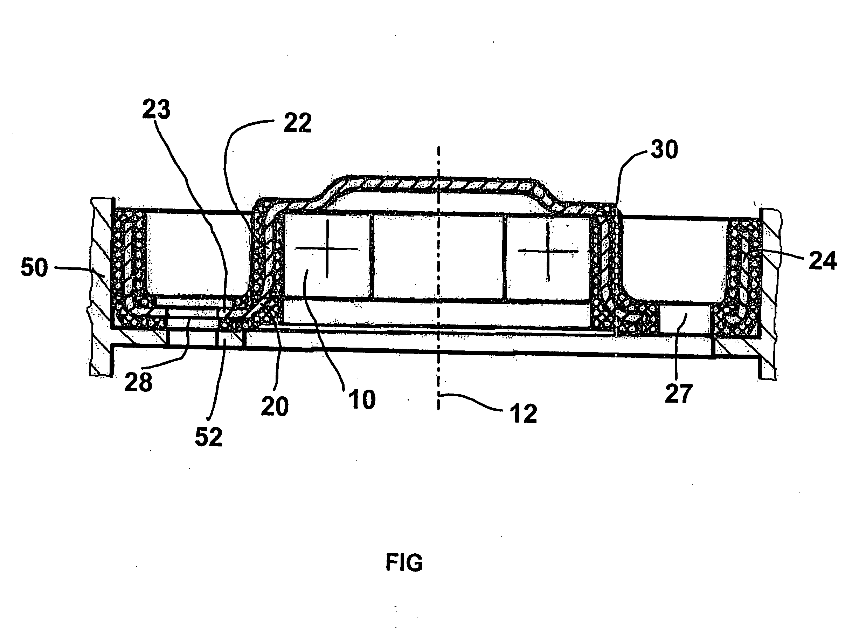

Weitere Vorteile, Merkmale und Einzelheiten der Erfindung ergeben sich aus dem nachfolgend beschriebenen Ausführungsbeispiel der Erfindung anhand der Figur.

Die Figur zeigt als ein Ausführungsbeispiel der Erfindung einen Längsschnitt durch eine Lageranordnung, umfassend ein Wälzlager 10, einen Tragkörper 20 und einen Kunststoffkörper 30. Dabei ist die Lageranordnung mit einem Gehäuse 50 einer Gasreinigungsvorrichtung, insbesondere eines Zentrifugalölabscheiders verbindbar. Das Wälzlager 10 ist dabei beispielsweise zum Aufnehmen einer Hohlwelle eines Zentrifugenrotors der Gasreinigungsvorrichtung ausgebildet.

Der Tragkörper 20 ist beispielsweise aus einem Stahlblech einstückig hergestellt. Der Tragkörper 20 umfasst dabei einen topfartigen Bereich 22 mit einem geschlossenen Boden zum Aufnehmen des Wälzlagers 10. Der Boden ist dabei derart ausgebaucht ausgebildet, dass eine Stirnseite eines Außenrings des Wälzlagers 10 unmittelbar am Boden anliegt und die entsprechende Stirnseite eines Innenrings des Wälzlagers 10 frei von einem Anliegen ist.

Der Tragkörper 20 umfasst weiterhin einen sich an den Rand des topfartigen Bereichs 22 anschließenden, sich im Wesentlichen radial nach außen hin erstreckenden, lochscheibenartigen Bereich 23. Der lochscheibenartige Bereich 23 weist dabei drei Durchtrittsöffnungen 27, die bogenartig ausgebildet sein können, und drei im Wesentlichen kreisförmige Befestigungsöffnungen 28 auf, wobei die Durchtrittsöffnungen 27 und die Befestigungsöffnungen 28 in Umfangsrichtung einander abwechseln und in Umfangsrichtung gleichmäßig verteilt angeordnet sind. Die drei Durchtrittsöffnungen 27 sind dabei für ein Hindurchführen des zu reinigenden Fluidstroms vorgesehen, wohingegen die drei Befestigungsöffnungen 28 für ein Befestigen der Lageranordnung an drei entsprechend angeordneten, mit Bohrungen versehenen Nasen 52 des Gehäuses 50 vorgesehen sind.

Schließlich umfasst der Tragkörper 20 einen sich an den äußeren Rand des lochscheibenartigen Bereichs 23 anschließenden, sich in Richtung des topfartigen Bereichs 22 erstreckenden, hohlzylinderartigen Bereich 24. Dabei erfolgt eine Zentrierung der Lageranordnung innerhalb des Gehäuses 50 durch ein definiertes Anliegen eines Außenmantels der Lageranordnung im Bereich des hohlzylinderartigen Bereichs 24 gegen eine entsprechend ausgebildete zylindrische Mantelfläche des Gehäuses 50. Damit hierüber eine exakte Zentrierung einer Hauptachse 12 des Wälzlagers 10 bezüglich des Gehäuses 50 erzielt wird, erstreckt sich der Kunststoffkörper 30 einerseits zwischen einem Außenmantel des Wälzlagers 10 und dem Innenmantel des topfartigen Bereichs 22 des Tragkörpers 20 und andererseits schichtartig auf dem Außenmantel des hohlzylinderartigen Bereichs 24 des Tragkörpers 20.

Dabei wird das Wälzlager 10 im Tragkörper 20 durch den Kunststoffkörper 30 gleichzeitig fixiert.

Der Kunststoffkörper 30 ist durch ein Spritzgießverfahren hergestellt, so dass für das vorausgehend beschriebene exakte Zentrieren lediglich auf ein exaktes Positionieren der Hauptachse 12 des Wälzlagers 10 bezüglich eines Innenmantels einer Spritzgießform im Bereich des hohlzylinderartigen Bereichs 24 zu achten ist. Dadurch ist mit Vorteil der Tragkörper 20 mit vergleichsweise großen Toleranzen und damit einfach und kostengünstig herstellbar, da eine exakte Positionierung des Wälzlagers 10 im Gehäuse 50 durch den Kunststoffkörper 30, insbesondere dessen Vorhandensein an den vorausgehend beschriebenen beiden Stellen, bewerkstelligt wird.

Dabei werden die sich beiderseits der Mantelflächen des hohlzylinderartigen Teilbereichs des topfartigen Bereichs 22 erstreckenden Teilbereiche des Kunststoffkörpers 30 über den Rand der Durchtrittsöffnung 27 miteinander zusammenhängend in einem gemeinsamen Spritzgießarbeitsgang hergestellt. Entsprechendes gilt für den hohlzylinderartigen Bereich 24 des Tragkörpers 20. Damit ist während des Spritzgießens, das unter einem erheblichen Druck von beispielsweise ≥ 600 bar erfolgt, sichergestellt, dass auf beide Mantelflächen jedes der vorgenannten hohlzylinderartigen Bereiche des Tragkörpers 20 gleiche Kräfte einwirken. Damit wird ein Verformen besagter hohlzylinderartiger Bereiche des Trägkörpers 20 während des Spritzgießens verhindert, wodurch eine Gefahr des Rückfederns dieser hohlzylinderartigen Bereiche des Trägerelements 20 nach Beendigung des Spritzgießens verhindert wird. Damit ist sichergestellt, dass auch nach Beendigung des Spritzgießens beispielsweise die Mittenachse der Öffnung des Innenrings des Wälzlagers 10 mit einer Mittenachse eines Außendurchmessers der Lageranordnung identisch bleibt und aufgrund des ausgeschlossenen Rückfederns auch keine nachträglichen Unrundheiten auftreten, die mit Nachteil unter anderem auf das Walzlager 10 übertragen werden könnten.

Gemäß dem dargestellten Ausführungsbeispiel erstreckt sich der Kunststoffkörper 30 über weitere Oberflächenbereiche des Tragkörpers 20. Dabei sei insbesondere auf den äußeren Randbereich des lochscheibenartigen Bereichs 23 hingewiesen, der an der sich radial erstreckenden Oberfläche des Gehäuses 50 anliegt. Dabei wird mit dem Vorhandensein des Kunststoffkörpers 30 in diesem Bereich mit dem Kunststoffkörper 30 gleichzeitig eine Dichtfunktion zwischen dem Gehäuse 50 und der Lageranordnung erzielt.

Anders als bei dem Ausführungsbeispiel der Erfindung gemäß der Figur kann sich in einer weiteren Ausführungsform ein sich außen am lochscheibenartigen Bereich einer Lageranordnung anschließender hohlzylinderartiger Bereich axial beiderseits des lochscheibenartigen Bereichs erstrecken. Dazu kann der Tragkörper in besagtem hohlzylinderartigen Bereich aus einem lochscheibenartigen Bereich hervorgehen, dessen Rand in Umfangsrichtung mit einer Reihe von beispielsweise durch Einschnitte voneinander getrennten Fahnen ausgebildet ist, von denen dann abwechselnd eine nach oben und die nächste nach unten hin gebogen wird. Der Rest des hohlzylinderartigen Bereichs wird dann durch den Kunststofflcörper gebildet.

In wiederum einer anderen Ausführungsform kann sich der außen am lochscheibenartigen Bereich anschließende Bereich auch ausschließlich in eine axiale Richtung weg vom topfartigen Bereich erstrecken.

### Bezugszeichenliste

- 10: Wälzlager
- 12: Hauptachse

- 20: Tragkörper
- 22: topfartiger Bereich
- 23: lochscheibenartiger Bereich
- 24: hohlzylinderartiger Bereich
- 27: Durchtrittsöffnung
- 28: Befestigungsöffnung

- 30: Kunststoffkörper

- 50: Gehäuse
- 52: Nase

## Patentansprüche

1. Lageranordnung zum Lagern eines sich drehenden Teils einer Maschine, umfassend
- ein Wälzlager (10),
- einen Tragkörper (20) mit einem ersten hohlzylinderartigen Abschnitt, dessen Innenmantel einen Außenmantel des Wälzlagers (10) im Wesentlichen umschließt, und mit einem zweiten, vom ersten verschiedenen Abschnitt, und
- einen Kunststoffkörper (30), der sich zwischen dem Außenmantel des Wälzlagers (10) und dem Innenmantel des Tragkörpers (20) erstreckt und der zum Bewirken einer vorgebbaren Zentrierung der Lageranordnung innerhalb ihrer Einbauumgebung (50) wenigstens teilweise eine Oberfläche des zweiten Abschnitts bedeckt.

2. Lageranordnung nach Anspruch 1, wobei der Kunststoffkörper (30) über einen Bereich einer Oberfläche des Tragkörpers (20) sich hinweg erstreckend angeordnet ist, der gegenüber der Einbauumgebung (50) bestimmungsgemäß eine Dichtfunktion wahrnimmt.

3. Lageranordnung nach einem der Ansprüche 1 oder 2, wobei der Kunststoffkörper (30) für ein Befestigen des Wälzlagers (10) im Tragkörper (20) ausgebildet ist.

4. Lageranordnung nach einem der Ansprüche 1 bis 3, wobei die für die Zentrierung bedeckte Oberfläche ein zylinderartiger Außenmantel des Tragkörpers (20) ist.

5. Lageranordnung nach einem der Ansprüche 1 bis 4, wobei der Tragkörper (20) einen topfartigen Bereich (22) mit geschlossenem Boden zum Bilden besagten Innenmantels umfasst.

6. Lageranordnung nach Anspruch 5, wobei der Tragkörper (20) einen sich an den Rand des topfartigen Bereichs (22) anschließenden, sich im Wesentlichen radial nach außen hin erstreckenden lochscheibenartigen Bereich (23) und einen sich an den äußeren Rand des lochscheibenartigen Bereichs (23) anschließenden hohlzylinderartigen Bereich (24) umfasst, der die besagte Oberfläche für die Zentrierung aufweist.

7. Lageranordnung nach Anspruch 6, wobei der lochscheibenartige Bereich (23) wenigstens eine zum Durchtritt eines Fluids vorgesehene Durchtrittsöffnung (27) umfasst.

8. Lageranordnung nach einem der Ansprüche 6 oder 7, wobei der lochscheibenartige Bereich (23) wenigstens eine im Wesentlichen kreisförmige Befestigungsöffnung (28) für ein Befestigen der Lageranordnung umfasst.

9. Lageranordnung nach einem der Ansprüche 7 oder 8, wobei in Umfangsrichtung gleichmäßig verteilt jeweils drei der Öffnungen (27, 28) vorgesehen sind.

10. Lageranordnung nach einem der Ansprüche 7 bis 9, wobei die Durchtrittsöffnungen (27) und die Befestigungsöffnungen (28) in Umfangsrichtung einander abwechselnd angeordnet sind.

11. Lageranordnung nach einem der Ansprüche 5 bis 10, wobei der Boden des topfartigen Bereichs (22) frei von dem Kunststoffkörper (30) ausgebildet ist.

12. Lageranordnung nach einem der Ansprüche 8 bis 11, wobei die Oberfläche des lochscheibenartigen Bereichs (23) auf einer Seite im Bereich einer der Öffnung (27, 28) frei von einer Beschichtung mit dem Kunststoffkörper (30) ausgebildet ist.

13. Lageranordnung nach einem der Ansprüche 8 bis 12, wobei ein sich axial erstreckender Oberflächenbereich einer der Öffnungen (27, 28) frei von einer Beschichtung mit dem Kunststoffkörper (30) ausgebildet ist.

14. Lageranordnung nach einem der Ansprüche 5 bis 13, wobei der Boden des topfartigen Bereichs (22) in einem Mittenbereich ausgebaucht ausgebildet ist.

15. Lageranordnung nach Anspruch 14, wobei die Ausbauchung derart ausgebildet ist, dass bei einem am Boden des topfartigen Bereichs (22) stirnseitig anliegenden Außenring des Wälzlagers (10) die entsprechende Stirnseite eines Innenrings des Wälzlagers (10) frei von einem Anliegen ist.

16. Lageranordnung nach einem der Ansprüche 1 bis 15, wobei der Kunststoffkörper (30) durch ein Spritzgießverfahren hergestellt ist.

17. Lageranordnung nach einem der Ansprüche 1 bis 16, wobei der Tragkörper (20) und/oder der Kunststoffkörper (30) einstückig ausgebildet sind.

18. Lageranordnung nach einem der Ansprüche 1 bis 17, wobei der Tragkörper (20) aus einem Blech, insbesondere einem Stahlblech, hergestellt ist.

19. Lageranordnung nach Anspruch 18, wobei das Blech ein Stahlblech ist.

20. Lageranordnung nach einem der Ansprüche 1 bis 19, wobei das Teil der Maschine eine Welle eines Zentrifugalölabscheiders ist.

## Claims

1. Bearing arrangement for mounting a rotating part of a machine, comprising
- a rolling bearing (10),
- a supporting body (20) having a first hollow cylindrical section, the inner shell of which substantially surrounds an outer shell of the rolling bearing (10), and having a second section which differs from the first section, and
- a plastic body (30) which extends between the outer shell of the rolling bearing (10) and the inner shell of the supporting body (20) and which, to provide predefinable centring of the bearing arrangement within its installation environment (50), at least partially covers a surface of the second section.

2. Bearing arrangement according to Claim 1, wherein the plastic body (30) is arranged so as to extend over a region, which is intended to perform a sealing function with respect to the installation environment (50), of a surface of the supporting body (20).

3. Bearing arrangement according to either of Claims 1 and 2, wherein the plastic body (30) is designed for fastening the rolling bearing (10) in the supporting body (20).

4. Bearing arrangement according to one of Claims 1 to 3, wherein the surface which is covered in order to provide the centring is a cylindrical outer shell of the supporting body (20).

5. Bearing arrangement according to one of Claims 1 to 4, wherein the supporting body (20) comprises a pot-shaped region (22) with a closed base for forming said inner shell.

6. Bearing arrangement according to Claim 5, wherein the supporting body (20) comprises a perforated-disc-like region (23) which adjoins the edge of the pot-shaped region (22) and which extends substantially radially outwards, and a hollow cylindrical region (24) which adjoins the outer edge of the perforated-disc-like region (23) and which has the said surface for providing the centring.

7. Bearing arrangement according to Claim 6, wherein the perforated-disc-like region (23) comprises at least one passage opening (27) provided for the passage of a fluid.

8. Bearing arrangement according to either of Claims 6 and 7, wherein the perforated-disc-like region (23) comprises at least one substantially circular fastening opening (28) for fastening the bearing arrangement.

9. Bearing arrangement according to either of Claims 7 and 8, wherein in each case three of the openings (27, 28) are distributed uniformly in the circumferential direction.

10. Bearing arrangement according to one of Claims 7 to 9, wherein the passage openings (27) and the fastening openings (28) are arranged so as to alternate with one another in the circumferential direction.

11. Bearing arrangement according to one of Claims 5 to 10, wherein the base of the pot-shaped region (22) is formed so as to be free from the plastic body (30).

12. Bearing arrangement according to one of Claims 8 to 11, wherein the surface of the perforated-disc-like region (23) is formed, on one side in the region of one of the openings (27, 28), so as not to be coated with the plastic body (30).

13. Bearing arrangement according to one of Claims 8 to 12, wherein an axially extending surface region of one of the openings (27, 28) is formed so as not to be coated with the plastic body (30).

14. Bearing arrangement according to one of Claims 5 to 13, wherein the base of the pot-shaped region (22) is formed with a bulge in a central region.

15. Bearing arrangement according to Claim 14, wherein the bulge is designed such that, when an outer ring of the rolling bearing (10) abuts at the end side against the base of the pot-shaped region (22), the corresponding end side of an inner ring of the rolling bearing (10) is not in abutment.

16. Bearing arrangement according to one of Claims 1 to 15, wherein the plastic body (30) is produced by means of an injection moulding process.

17. Bearing arrangement according to one of Claims 1 to 16, wherein the supporting body (20) and/or the plastic body (30) are formed in one piece.

18. Bearing arrangement according to one of Claims 1 to 17, wherein the supporting body (20) is produced from a metal sheet, in particular from a steel sheet.

19. Bearing arrangement according to Claim 18, wherein the metal sheet is a steel sheet.

20. Bearing arrangement according to one of Claims 1 to 19, wherein the part of the machine is a shaft of a centrifugal oil separator.

## Revendications

1. Arrangement de palier pour supporter une partie tournante d'une machine, comprenant
- un palier de roulement (10),
- un corps porteur (20) avec une première partie cylindrique creuse, dont la surface latérale intérieure entoure essentiellement une surface latérale extérieure du palier de roulement (10), et avec une deuxième partie, différente de la première, et
- un corps de matière plastique (30), qui s'étend entre la surface latérale extérieure du palier de roulement (10) et la surface latérale intérieure du corps porteur (20) et qui recouvre au moins partiellement une surface de la deuxième partie pour assurer un centrage prédéfini de l'arrangement de palier à l'intérieur de son environnement de montage (50).

2. Arrangement de palier selon la revendication 1, dans lequel le corps de matière plastique (30) est disposé de façon à s'étendre au-delà d'une région de la surface du corps porteur (20), qui assure une fonction d'étanchéité désirée par rapport à l'environnement de montage (50).

3. Arrangement de palier selon l'une quelconque des revendications 1 ou 2, dans lequel le corps de matière plastique (30) est réalisé de façon à fixer le palier de roulement (10) dans le corps porteur (20).

4. Arrangement de palier selon l'une quelconque des revendications 1 à 3, dans lequel la surface couverte pour le centrage est une surface latérale extérieure cylindrique du corps porteur (20).

5. Arrangement de palier selon l'une quelconque des revendications 1 à 4, dans lequel le corps porteur (20) comprend une région en forme de godet (22) avec un fond fermé pour former ladite surface latérale intérieure.

6. Arrangement de palier selon la revendication 5, dans lequel le corps porteur (20) comprend une région (23) en forme de disque perforé se raccordant au bord de la région en forme de godet (22) et s'étendant essentiellement radialement vers l'extérieur et une région en forme de cylindre creux (24) se raccordant au bord extérieur de la région (23) en forme de disque perforé, qui présente ladite surface destinée au centrage.

7. Arrangement de palier selon la revendication 6, dans lequel la région en forme de disque perforé (23) comprend au moins une ouverture de passage (27) prévue pour le passage d'un fluide.

8. Arrangement de palier selon l'une quelconque des revendications 6 ou 7, dans lequel la région en forme de disque perforé (23) comprend au moins une ouverture de fixation (28) essentiellement circulaire pour une fixation de l'arrangement de palier.

9. Arrangement de palier selon l'une quelconque des revendications 7 ou 8, dans lequel il est prévu chaque fois trois des ouvertures (27, 28) uniformément réparties en direction périphérique.

10. Arrangement de palier selon l'une quelconque des revendications 7 à 9, dans lequel les ouvertures de
passage (27) et les ouvertures de fixation (28) sont disposées en alternance entre elles dans la direction périphérique.

11. Arrangement de palier selon l'une quelconque des revendications 5 à 10, dans lequel le fond de la région en forme de godet (22) est libre du corps de matière plastique (30).

12. Arrangement de palier selon l'une quelconque des revendications 8 à 11, dans lequel la surface de la région en forme de disque perforé (23) est libre d'un revêtement avec le corps de matière plastique (30) sur un côté dans la région d'une des ouvertures (27, 28).

13. Arrangement de palier selon l'une quelconque des revendications 8 à 12, dans lequel une région superficielle s'étendant axialement d'une des ouvertures (27, 28) est libre d'un revêtement avec le corps de matière plastique (30).

14. Arrangement de palier selon l'une quelconque des revendications 5 à 13, dans lequel le fond de la région en forme de godet (22) est réalisé avec un renflement dans une région centrale.

15. Arrangement de palier selon la revendication 14, dans lequel le renflement est réalisé de telle manière que, avec une bague extérieure du palier de roulement (10) appliquée du côté frontal sur le fond de la région en forme de godet (22), la face frontale correspondante d'une bague intérieure du palier de roulement (10) est libre d'application.

16. Arrangement de palier selon l'une quelconque des revendications 1 à 15, dans lequel le corps de matière plastique (30) est fabriqué par un procédé de moulage par injection.

17. Arrangement de palier selon l'une quelconque des revendications 1 à 16, dans lequel le corps porteur (20) et/ou le corps de matière plastique (30) sont réalisés d'une seule pièce.

18. Arrangement de palier selon l'une quelconque des revendications 1 à 17, dans lequel le corps porteur (20) est fabriqué à partir d'une tôle, en particulier à partir d'une tôle d'acier.

19. Arrangement de palier selon la revendication 18, dans lequel la tôle est une tôle d'acier.

20. Arrangement de palier selon l'une quelconque des revendications 1 à 19, dans lequel la partie de la machine est un arbre d'un séparateur d'huile centrifuge.
